# NEUE EUROPÄISCHE PATENTSCHRIFT

(11) **EP 2 801 533 B2**
(45) Veröffentlichungstag und Bekanntmachung des Hinweises auf die Entscheidung über den Einspruch: **07.04.2021**
(45) Hinweis auf die Patenterteilung: 28.12.2016
(21) Anmeldenummer: 14167404.4
(22) Anmeldetag: 07.05.2014
(51) Int. Cl.: B65B 53/06, G06T 7/00, B65B 57/00, G01N 21/88, G01N 21/95

(54) **Vorrichtung und Verfahren zum Herstellen von Behältniszusammenstellungen**
Device and method for the production of container combinations
Dispositif et procédé de fabrication d'assemblages de récipient

(30) Priorität: 07.05.2013 DE 102013104666
(43) Veröffentlichungstag der Anmeldung: 12.11.2014
(73) Patentinhaber: Krones AG, 93073 Neutraubling (DE)
(72) Erfinder: Napravnik, Christian, 93073 Neutraubling (DE)
(74) Vertreter: Bittner, Bernhard

(56) Entgegenhaltungen:
- EP-A2- 0 330 495
- EP-A2- 0 330 495
- WO-A1-2011/110938
- WO-A2-2008/116546
- DE-A1- 4 112 263
- DE-A1- 4 114 798
- DE-A1-102007 011 526
- DE-A1-102007 014 802
- US-A1- 2009 293 430
- "Neurocheck - Software für die industrielle Bildverarbeitung", BROCHURE NEUROCHECK, , 1. Januar 2003 (2003-01-01), Seiten 1-19, XP007908603, Gefunden im Internet: URL:http://www.neurocheck.de/IMAGES/PDFs/N cbrochure_g.pdf
- KONRAD HENTSCHEL ET AL: "Telezentrische Objektive für die industrielle Bildverarbeitung", INTERNET CITATION, 23. April 1999 (1999-04-23), Seiten 1-4, XP002663141, Gefunden im Internet: URL:http://www.silloptics.de/downloads/tel ez.objektive.pdf [gefunden am 2011-11-09]
- "INDUSTRIELLE BILDVERARBEITUNG MIT DEM PC LEITFADEN ZUR PLANUNG UND REALISIERUNG", F & M FEINWERKTECHNIK MIKROTECHNIK MIKROELEKTRONIK, HANSER, MUNCHEN, DE, Bd. 106, Nr. 10, 1. Oktober 1998 (1998-10-01), Seiten 738-741, XP000854387, ISSN: 1437-9503

## Beschreibung

Die vorliegende Erfindung bezieht sich auf eine Vorrichtung und ein Verfahren zum Herstellen von Behältniszusammenstellungen und insbesondere von Schrumpfgebinden. Derartige Schrumpfgebinde sind aus dem Stand der Technik seit langem bekannt. Diese weisen üblicherweise eine Zusammenstellung von mehreren Objekten und insbesondere Behältnissen auf, die von einem Verpackungsmaterial zusammengehalten werden. Dabei ist es aus dem Stand der Technik bekannt, dass zunächst eine Zusammenstellung aus mehreren Behältnissen gebildet wird, diese wenigstens teilweise in ein folienartiges Verpackungsmaterial eingehüllt wird und in einem weiteren Schritt dieses Verpackungsmaterial an die Behältniszusammenstellung angeschrumpft wird, etwa, indem dieses Material durch Wärmeeinwirkung geschrumpft wird.

Üblicherweise arbeiten derartige Verfahren auch sehr zufriedenstellend. In Einzelfällen kann es jedoch dazu kommen, dass die Behältniszusammenstellungen unregelmäßig zusammengestellt werden, beispielsweise einzelne Behältnisse gegenüber anderen versetzt sind. Derartige Zusammenstellungen können bei der Weiterverarbeitung, beispielsweise beim Transport oder stapeln, zu Schwierigkeiten führen. Daneben kann es auch beim Einhüllen der zusammengestellten Behälter mit Folie zu einem Versatz kommen wie beispielsweise einem Diagonaleinschlag oder Folienversatz (der Folienüberstand links und rechts ist nicht gleich groß). Im Schrumpftunnel kann es durch z.B. chargenbedingte Eigenschaftsänderungen der Folie oder falsche Einstellung des Schrumpftunnels zu Faltenbildung, unregelmäßigen Folienaugen an den Seiten oder offenen Paketen kommen. Auch Überlappungsfalten und Lochbildung in der Folie sind möglich.

Der vorliegenden Erfindung liegt daher die Aufgabe zugrunde, eine Vorrichtung und ein Verfahren zur Verfügung zu stellen, welche einen reibungsloseren Ablauf bei der Herstellung derartiger Schrumpfgebinde ermöglichen. Diese Aufgabe wird erfindungsgemäß durch die Gegenstände der unabhängigen Ansprüche erreicht. Vorteilhafte Ausführungsformen und Weiterbildungen sind Gegenstand der Unteransprüche.

Eine erfindungsgemäße Vorrichtung zum Herstellen von Behältniszusammenstellungen weist eine Verpackungseinrichtung auf, welche mehrere Behältnisse, zumindest teilweise, mit einem folienartigen Verpackungsmittel versieht und insbesondere zumindest teilweise umhüllt und so eine Behältniszusammenstellung bildet.

Weiterhin weist die Vorrichtung eine Schrumpfeinrichtung auf, welche das die Behältnisse wenigstens teilweise umhüllende Verpackungsmittel schrumpft. Daneben weist die Vorrichtung eine Transporteinrichtung auf, welche die von dem Verpackungsmittel wenigstens teilweise umhüllten Behältnisse in einer vorgegebenen Transportrichtung transportiert. Schließlich ist auch eine Inspektionseinrichtung vorgesehen, welche die von dem Verpackungsmittel wenigstens teilweise umhüllten Behältnisse nach dem Schrumpfvorgang inspiziert.

Unter "wenigstens teilweise umhüllen" wird verstanden, dass das Verpackungsmittel die Behältniszusammenstellung nicht voll umfänglich umgeben muss (jedoch kann), sondern dass auch beispielsweise Aussparungen und Löcher (im Folgenden auch als "Auge" bezeichnet) gebildet sein können. Vorzugsweise umgibt das Verpackungsmittel die Behältniszusammenstellung wenigstens in einer Umfangsrichtung vollständig. Vorteilhaft ist das Verpackungsmittel derart ausgebildet, dass wenigstens eine Seitenfläche der Behältniszusammenstellung vollständig von dem Verpackungsmittel abgedeckt ist. Vorteilhaft sind wenigstens zwei und bevorzugt wenigstens drei und bevorzugt wenigstens vier Seitenflächen der Behältniszusammenstellungen vollständig mit dem Verpackungsmittel bedeckt, bzw. durch dieses geschlossen.

Bei einer weiteren vorteilhaften Ausführungsform handelt es sich bei dem folienartigen Material um einen Kunststoff. Bei einer weiteren bevorzugten Ausführungsform weist die Vorrichtung auch eine Gruppenbildungseinrichtung auf, welche vorgegebene Gruppen von Behältnissen bildet, wobei diese Gruppen vorgegebene Anzahlen an Behältnissen aufweisen, Vorteilhaft ist diese Gruppenbildungseinrichtung in der Transportrichtung der Behältnisse vor der Verpackungseinrichtung angeordnet.

Weiterhin weist bevorzugt die Schrumpfeinrichtung eine Erwärmungseinrichtung zum Erwärmen des Verpackungsmittels auf. Dabei kann die Schrumpfeinrichtung als Schrumpftunnel ausgestaltet sein, durch welchen die Behältniszusammenstellungen mit der daran angelegten Folie geführt werden, wobei die Erwärmung der Folie ein Anschrumpfen derselben an die Behältniszusammenstellung bewirkt.

Bei der Transporteinrichtung kann es sich beispielsweise um ein Transportband oder eine Transportkette handeln.

Bei einer weiteren vorteilhaften Ausführungsform inspiziert die Inspektionseinrichtung die Behältniszusammenstellungen berührungslos.

Bei einer weiteren vorteilhaften Ausführungsform ist das Verpackungsmaterial wenigstens teilweise transparent. Vorteilhaft ist das Verpackungsmaterial auch wenigstens abschnittsweise und bevorzugt vollständig flexibel und kann sich an eine Oberflächenstruktur der Behältnisse zumindest abschnittsweise anpassen.

Bei einer weiteren vorteilhaften Ausführungsform ist es auch denkbar, dass die Transporteinrichtung die Gebinde mehrbahnig transportiert, das heißt, dass in einer senkrecht zu einer Transportrichtung stehenden Richtung auch mehrere Behältniszusammenstellungen nebeneinander transportiert werden können. Dabei ist es möglich, dass die Inspektionseinrichtung mehrerer dieser Behältniszusammenstellungen gleichzeitig beobachtet. Es wäre jedoch auch möglich, dass parallel mehrere Inspektionseinrichtungen eingesetzt werden.

Bei einer bevorzugten Ausgestaltung wird damit eine automatische Inspektion vorgeschlagen. Vorteilhaft erlaubt die Inspektionseinrichtung eine automatische Vermessung der Behältniszusammenstellung. Dabei ist es beispielsweise denkbar, dass Toleranzüberschreitungen erkannt werden. Insbesondere ist es dabei möglich, Außenabmessungen der Behältniszusammenstellungen zu vermessen und insbesondere auch Abweichungen von vorgegebenen Referenz - Abmessungen. Ebenso kann eine beliebige geometrische Anordnung der der Behälter im Gebinde als Soll-Muster vorgegeben werden.
Geometrische Anordnung der Behälter sowie Toleranzwerte und Abmessungen sowie Ausstattungsmerkmale werden Sorten- bzw. Chargenspezifisch im Bildverarbeitungsrechner bzw. Steuereinrichtung hinterlegt. Die Auswahl der jeweils benötigten Parameter kann beispielsweise über den Leitrechner der Gesamtanlage erfolgen oder über die vorgeschaltete Führungsmaschine.

Daneben und/oder zusätzlich ist es auch möglich, dass die Inspektionseinrichtung die Position und oder Abmessungen bzw. Geometrie der oben erwähnten Öffnung in dem Verpackungsmittel inspiziert.

Bei einer weiteren vorteilhaften Ausführungsform weist die Vorrichtung eine Steuerungs- bzw. Regelungseinrichtung auf, die in Abhängigkeit von einem von der Inspektionseinrichtung erfassten Ergebnis bzw. Messwert die Verpackungseinrichtung und/oder die Schrumpfeinrichtung steuert.

Bei einer weiteren vorteilhaften Ausführungsform weist die Vorrichtung eine Ausschleuseinrichtung auf, die bevorzugt der Inspektionseinrichtung nachgeordnet ist und die ein Ausschleusen bestimmter Behältniszusammenstellungen, insbesondere als in irgendeiner Weise fehlerhaft erkannter Behältniszusammenstellungen, ermöglicht. Dabei ist es möglich, dass eine derartige Steuerungseinrichtung unterscheiden kann zwischen solchen Behältniszusammenstellungen, welche im fortlaufenden Betrieb eine Störung, beispielsweise im Gebindetransport oder im Palettierer hervorrufen können und solchen, die für die Weiterverarbeitung noch akzeptabel sind.

Bei einer weiteren vorteilhaften Ausführungsform ist die Inspektionseinrichtung in der Transporteinrichtung der Behältnisse nach der Schrumpfeinrichtung angeordnet. Vorteilhaft ist die Inspektionseinrichtung auch auf einen Bereich der Vorrichtung angeordnet, der nach der Schrumpfeinrichtung befindlich ist. Daneben könnte jedoch auch eine weitere Inspektionseinrichtung vorgesehen sein, welche beispielsweise die Schrumpfeinrichtung selbst überwacht, wie etwa eine Kamera, die ein Innenleben der Schrumpfeinrichtung wenigstens teilweise erfasst.

Vorteilhaft ist die Inspektionseinrichtung unmittelbar nach der Schrumpfeinrichtung, also etwa direkt an einem Ausgang eines Schrumpftunnels angeordnet. Der Vorteil einer derartigen Anordnung besteht in kurzen Totzeiten bei der Regelung. Bevorzugt ist die Inspektionseinrichtung derart angeordnet, dass in einem normalen Arbeitsbetrieb die Behältniszusammenstellungen nach Verlassen der Schrumpfeinrichtung die Inspektionseinrichtung innerhalb eines Zeitraums erreichen, der kürzer ist als 10s, bevorzugt kürzer als 6s, bevorzugt kürzer als 5s und besonders bevorzugt kürzer als 3s.

Bei einer weiteren vorteilhaften Ausführungsform weist die Inspektionseinrichtung eine Bildaufnahmeeinrichtung auf, welche geeignet und vorgesehen ist, Bilder von den Behältniszusammenstellungen aufzunehmen. Bei dieser Bildaufnahmeeinrichtung handelt es sich bevorzugt um eine Bildaufnahmeeinrichtung, welche ortsaufgelöste Bilder aufnehmen kann, wie beispielsweise eine Kamera, eine Videokamera, einen CCD-Chip oder dergleichen. Vorteilhaft ist die Inspektionseinrichtung auch geeignet, ein Bild der gesamten Behältniszusammenstellung aufzunehmen, insbesondere auch einschließlich deren Seitenflächen.

So ist es beispielsweise möglich, dass eine optische Vermessung aus einer vorgegebenen Richtung und insbesondere von oben vorgenommen wird. Unter "von oben" wird dabei eine Beobachtungsrichtung verstanden, welche die Behältnisse von oben, also insbesondere in aufrecht stehender Position, auf deren Behältnisverschlüsse vornimmt. So ist es beispielsweise möglich, dass über einer Gebindebahn eine Kamera angebracht ist, die in vorgegebener Weise und bevorzugt vertikal nach unten ausgerichtet ist.

Dabei ist es auch denkbar, dass diese Bildaufnahmeeinrichtung getriggert ist, beispielsweise durch einen Sensor, um so zu erreichen, dass jede Behältniszusammenstellung in einer vorgegebenen Position, beispielsweise genau zentrisch, beobachtet wird. Vorteilhaft weist die Inspektionseinrichtung auch eine Bildanalyseeinrichtung auf, welche geometrische Grenzen der Behältniszusammenstellung erfasst. Daneben kann diese Bildanalyseeinrichtung auch geeignet sein, um die Positionen der einzelnen Behältnisenden bzw. Behältnisverschlüsse ermitteln zu können. Weiterhin kann die Bildanalyseeinrichtung auch geeignet sein, das Fehlen einzelner Behältnisse in einer Behältniszusammenstellung zu erfassen.

Bei einer weiteren vorteilhaften Ausführungsform ist daher die Inspektionseinrichtung geeignet, eine Relativposition eines Behältnisses der Behältniszusammenstellung gegenüber wenigstens einem weiteren Behältnis dieser Behältniszusammenstellung zu erfassen und/oder weitere Größen, welche sich aus diesen Relativpositionen ergeben können. Dabei ist vorteilhaft auch eine Auswerteeinheit vorgesehen, welche diese erfassten Positionen auswertet. So kann beispielsweise eine Vergleichseinrichtung vorgesehen sein, die die erfassten Positionen gegenüber einer Referenz bzw. einer Soll-Position vergleicht.

Bei einer weiteren vorteilhaften Ausführungsform weist die Vorrichtung daher eine Positionserfassungseinrichtung auf, welche die Position der von dem Verpackungsmittel umhüllten Behältnisse -insbesondere in der Transportrichtung aber vorteilhaft auch quer zu der Transporteinrichtung - erfasst. Vorteilhaft nimmt die Bildaufnahmeeinrichtung ein Bild der Behältniszusammenstellung während deren Bewegung, insbesondere deren Bewegung in der Transportrichtung, auf. So kann beispielsweise eine Lichtschranke vorgesehen sein, welche eine Bildaufnahmeeinrichtung in einer vorgegebenen Position der Behältniszusammenstellung auslöst.

Der nachfolgende Text ist auf eine hier nicht erfindungsgemäße Inspektionseinrichtung zum Inspizieren von Behältniszusammenstellungen gerichtet, wobei die Behältniszusammenstellungen eine Vielzahl von Behältnissen aufweisen, welche von einem - insbesondere folienartigen - Verpackungsmittel wenigstens teilweise umhüllt sind. Diese Inspektionseinrichtung weist eine Bildaufnahmeeinrichtung auf, welche die Behältniszusammenstellungen beobachtet.

Die nicht erfindungsgemäße Inspektionseinrichtung weist eine Ausgabeeinrichtung auf, welche wenigstens ein Signal ausgibt, welches für eine Relativposition wenigstens eines Behältnisses der Behältniszusammenstellung gegenüber wenigstens einem zweiten Behältnis dieser Behältniszusammenstellung charakteristisch ist und/oder welches für wenigstens eine Aussenoberfläche der Behältniszusammenstellung und/oder wenigstens einen Verlauf dieser Behältnisoberfläche gegenüber einem Idealverlauf charakteristisch ist.

Daneben oder alternativ kann diese Ausgabeeinrichtung jedoch auch derart gestaltet sein, dass sie ein Signal ausgibt, welches für ein Fehlen eines oder mehrerer Behältnisse in der Behältniszusammenstellung charakteristisch ist. Vorteilhaft ist die Inspektionseinrichtung dabei geeignet, während einer Bewegung der Behältniszusammenstellungen diese aufzunehmen.

Bei der Ausgabeeinrichtung kann es sich beispielsweise um eine Bildausgabeeinrichtung, wie einen Monitor handeln, der bevorzugt in geeigneter Weise Informationen an den Benutzer ausgibt, welche Rückschlüsse auf die Qualität und Güte einer derartigen Behältniszusammenstellung zulassen.

Dabei ist es möglich, dass angegeben wird, ob ein von der Ausgabeeinrichtung aufgenommener Wert bestimmte Toleranzen übersteigt. Dabei ist es auch möglich, dass ein Vergleich mit einem Referenzbild ausgegeben wird. Auf diese Weise ist auch allgemein eine Qualitätsanalyse der Behältniszusammenstellung möglich. So könnte laufend die Qualität der gebildeten Behältniszusammenstellungen überprüft werden und zwar beispielsweise hinsichtlich der Abmessungen der Behältniszusammenstellungen, hinsichtlich Fehlen einzelner Behältnisse, hinsichtlich Fehlern des Packmittels und dergleichen.

Bei einer weiteren nicht erfindungsgemäßen Ausführungsform weist die Inspektionseinrichtung eine Speichereinrichtung auf, in der Referenzen, beispielsweise Referenzbilder, gespeichert sind. Es wäre jedoch auch möglich, dass es sich bei diesen Referenzen um vereinfachte Darstellungen handelt, beispielsweise um Rechtecke, welche für den Umfang einer derartigen Behältniszusammenstellung charakteristisch sind. Bei einer weiteren nicht erfindungsgemäßen Ausführungsform kann diese Inspektionseinrichtung modulartig ausgebildet sein und insbesondere hinter einer Schrumpfeinrichtung einer Anlage zum Herstellen derartiger Schrumpfgebinde angeordnet sein. Auch wäre es möglich, dass in der besagten Speichereinrichtung Bilder, welche von den Behältniszusammenstellungen aufgenommen wurden, gespeichert werden wobei diese Speicherung insbesondere mit einer Zuordnung zu der jeweiligen aufgenommenen Behältniszusammenstellung erfolgt.

Bei einer weiteren nicht erfindungsgemäßen Ausführungsform ist die Bildaufnahmeeinrichtung derart angeordnet, dass sie die Behältniszusammenstellung von oben her beobachtet. Dabei kann beispielsweise eine Kamera vertikal über einer Transportbahn der Behältniszusammenstellungen angeordnet sein, es wäre jedoch auch möglich, dass eine Beobachtungsrichtung, beispielsweise über Spiegelelemente, umgelenkt wird. Alternativ oder insbesondere auch zusätzlich kann auch eine Beobachtung der Behältniszusammenstellungen von unten erfolgen.

Daneben kann jedoch auch eine Beobachtung aus unterschiedlichen Betrachtungsrichtungen vorgenommen werden, etwa eine Beobachtung von oben, um einen Behältnisversatz oder das Fehlen von Behältnissen festzustellen, eine Beobachtung von schräg oben, insbesondere in der Transportrichtung, um die Stirnflächen der Behältniszusammenstellungen zu erfassen, eine Beobachtung von der Seite, um die Folienaugen zu erfassen und/oder eine Beobachtung von unten, beispielsweise, um die Qualität der unteren Folienüberlappung und der Lochbildung im Bodenbereich zu überprüfen.

Weiterhin ist die nicht erfindungsgemäße Inspektionseinrichtung geeignet, zumindest auch teilweise eine und bevorzugt mehrere Seitenflächen der Behältniszusammenstellung zu beobachten bzw. Bilder auch dieser seitigen Bereiche aufzunehmen. Unter einer Seitenfläche werden diejenigen Flaschen der Behältniszusammenstellung verstanden, die sich auch in einer Beobachtungsrichtung erstrecken, also etwa im Falle einer Hauptbeobachtungsrichtung in vertikaler Richtung diejenigen Flächen, die auch in dieser vertikalen Richtung eine Erstreckungskomponente aufweisen.

Bei einer weiteren vorteilhaften Ausführungsform weist die Vorrichtung eine Positionserfassungseinrichtung auf, welche eine Position der Behältniszusammenstellung in ihrer Transportrichtung erfasst. Weiterhin ist bevorzugt auch eine Steuerungseinrichtung vorgesehen, welche die Inspektionseinrichtung in Abhängigkeit von einer erfassten Position der Behältniszusammenstellung steuert.

Daneben ist bevorzugt eine Regelungseinrichtung vorgesehen, welche wenigstens eine in der Transportrichtung der Behältniszusammenstellungen stromaufwärts liegende Einheit, also insbesondere die Verpackungseinrichtung und/oder die Schrumpfeinrichtung in Abhängigkeit von einem Inspektionsergebnis der Inspektionseinrichtung bzw. der Beobachtungseinrichtung steuert bzw. regelt. Dabei könnte beispielsweise eine Regelung in Form eines geschlossenen Regelkreises vorgesehen sein.

Weiterhin ist es möglich beim bzw. nach dem Ausschleusen von Gebinden, insbesondere Mischgebinden die vorgelagerten Maschinen so zu steuern, dass die fehlenden Sorten nachproduziert werden. Vorgelagerte Maschinen wären in diesem Fall die Füllmaschine und die Etikettiermaschine sowie die Sortiereinrichtung bzw. Gruppenbildungseinrichtung die die fehlende Menge stückgenau nachproduzieren müssen.

Bei einer weiteren hier nicht erfindungsgemäßen Ausführungsform weist die Inspektionseinrichtung wenigstens einen Linsenkörper auf, der zwischen der Behältniszusammenstellung bzw. deren Transportbahn und der Bildaufnahmeeinrichtung angeordnet ist. Bei diesem Linsenkörper kann es sich beispielsweise und auch bevorzugt um eine Fresnel-Linse handeln.

Bei einer weiteren hier nicht erfindungsgemäßen Ausführungsform weist die Inspektionseinrichtung wenigstens ein Strahlumlenkelement auf, welches die Beobachtung einer Seitenfläche der Behältniszusammenstellung ermöglicht. So können beispielsweise Spiegel, Prismen und dergleichen vorgesehen sein, welche die Beobachtung der genannten Seitenflächen ermöglichen.

So wäre es beispielsweise möglich, dass über eine, hier nicht erfindungsgemäße, geeignete und unten noch genauer dargestellte Spiegeloptik auch eine und bevorzugt mehrere Seiten der Behältniszusammenstellung komplett oder ausschnittsweise in Richtung der Bildaufnahmeeinrichtung projiziert werden. Alternativ und/oder zusätzlich könnten auch seitlich bezüglich des Transportpfades der Behältniszusammenstellung, beispielsweise links oder rechts von der Behältniszusammenstellung, ebenfalls Kameras angebracht werden. Dies bietet sich insbesondere bei einem einbahnigen Betrieb der Vorrichtung an.

Bei einer weiteren hier nicht erfindungsgemäßen Ausführungsform wäre es auch denkbar, dass wenigstens ein Strahlumlenkelement bzw. allgemein die Beobachtungsoptik bzw. die Spiegelelemente beweglich angebracht sind beispielsweise schwenkbar und oder drehbar, um so verschiedene Bereiche des Gebindes der Gebindezusammenstellung im Vorbeifahren erfassen zu können. Auch kann durch eine derartige Bewegbarkeit eine verbesserte Beobachtung der gesamten Behältniszusammenstellung erreicht werden.

So könnten die Strahlumlenkelemente sich beispielsweise mit einer an die Transportgeschwindigkeit der Behältniszusammenstellung angepassten Geschwindigkeit bewegen, auch wäre es denkbar, dass durch die Bewegung der Strahlumlenkelemente bestimmte Bereich der Behältniszusammenstellung abgescannt werden.

Bei einem mehrbahnigen Betrieb wäre es beispielsweise denkbar, dass eine erste Bildaufnahmeeinrichtung oberhalb bezüglich der Behältniszusammenstellungen angeordnet ist und zwei weitere Bildaufnahmeeinrichtungen jeweils an den beiden Außenseiten der mehrbahnigen Transporteinrichtung. Dabei kann das Umlenkelement bzw. die erwähnte Spiegeloptik so gestaltet sein, dass die gesamte Seitenfläche abgebildet wird, es wäre jedoch auch möglich, dass jeweils nur Abschnitte bzw. Stücke der Seitenflächen beobachtet werden. So wäre es möglich, aus mehreren derartiger Abschnitte wiederum das komplette Abbild einer Seitenfläche zusammenzusetzen.

Weiterhin weist die hier nicht erfindungsgemäße Inspektionseinrichtung vorteilhaft eine Korrektureinrichtung auf, welche durch eine Optik bedingte Verfälschungen, wie beispielsweise Verzerrungen, korrigiert.

Alternativ oder zusätzlich, jedoch hier nicht erfindungsgemäß, könnten auch sogenannte Linienscanner eingesetzt werden, bei denen aus einzelnen Spalten einer Seitenansicht ein vollständiges Bild zusammengesetzt wird.

Dabei ist es denkbar, dass kritische bzw. neuralgische Bereiche dieser Seitenflächen, wie beispielsweise eine Verschweißung eines seitlichen unteren Folienlappens, zusätzlich oder alternativ auf ihre Güte hin geprüft werden. Zu diesem Zweck kann beispielsweise ein kapazitiver Sensor als weitere Inspektionseinrichtung eingesetzt werden.

Über eine, jedoch hier nicht erfindungsgemäße, Steuerung, welche auch zumindest teilweise softwareseitig ausgeführt sein kann, ist es möglich, laufend die Qualität der Behältniszusammenstellungen zu überwachen und vorteilhaft auch zu protokollieren. Vorteilhaft weist die nicht erfindungsgemäße Inspektionseinrichtung daher eine Speichereinrichtung auf, welche geeignet ist, erfasste Messergebnisse der Inspektion der Behältniszusammenstellungen zu speichern. Das Nachregeln einer weiteren Einheit, wie beispielsweise eines vorgeordneten Packers und/oder Schrumpftunnels bzw. auch ein automatisches Ausschleusen von Behältniszusammenstellungen, können ebenfalls über die erwähnte Steuerung erreicht werden.

Dabei ist es möglich, dass die von den Behältniszusammenstellungen aufgenommenen Bilder gespeichert werden, insbesondere, um so in vorgegebenen Zeitabständen die Qualität der Behältniszusammenstellungen zu beurteilen.

Auf diese Weise ist es möglich, die Beurteilung auch unabhängig von dem jeweils die Beurteilung durchführenden Benutzer zu gestalten.

Daneben ist es auch möglich, die Behältniszusammenstellungen hinsichtlich farblicher Eigenschaften zu kontrollieren, etwa hinsichtlich von farbigen Aufdrucken auf dem Verpackungsmittel. So wäre es beispielsweise möglich, die Lage von Farbmustern zu überwachen, z.B. die Position eines weißen Logos auf einem andersfarbigen Grund.

So ist es beispielsweise möglich, durch den RGB-Wert das Wandern und den Erhalt der Größe dieses Logos zu überwachen.

Bei einer weiteren, hier nicht erfindungsgemäßen, Ausführungsform ist die Inspektionseinrichtung geeignet, bestimmte Punkte eines aufgenommenen Bildes, beispielsweise die Köpfe der Behältnisse, zu identifizieren und anhand dieses Bildes einen Wert auszugeben, der für eine geometrische Anordnung der einzelnen Behältnisse innerhalb der Behältniszusammenstellung charakteristisch ist.

Neben der hier beschriebenen Inspektion der Geometrie der Behältniszusammenstellung können jedoch auch andere Charakteristika ermittelt werden, wie beispielsweise das Auslesen eines Bar-Codes oder einer anderen Markierung, welche für die Behältniszusammenstellung charakteristisch ist. Daneben kann auch vorteilhaft das Verpackungsmittel auf seine Qualität hin geprüft werden, beispielsweise auf Verzerrungen, Löcher und dergleichen. Daneben kann auf diese Weise auch das Design der Behältniszusammenstellung in seiner Gesamtheit überprüft werden.

Bei einer weiteren, hier nicht erfindungsgemäßen, Ausführungsform ist es auch denkbar, ein Höhenprofil der Behältniszusammenstellung zu vermessen. Daneben kann auch eine Auswertung im Hinblick auf weitere Bestandteile der Behältniszusammenstellung durchgeführt werden. So kann beispielsweise überprüft werden, ob zusätzliche Elemente, beispielsweise eine Griffanordnung (Handleapplikator), vorhanden ist. Daneben können auch OCRs und OCVs ausgewertet werden. Daneben kann auch allgemein eine Inspektion im Hinblick auf Verschmutzungen, Beschädigungen und auch eine Identität der Behältniszusammenstellung erfolgen.

Bei einer weiteren vorteilhaften ausführungsform weist die Vorrichtung wenigstens eine Beleuchtungseinrichtung zum Beleuchten der Behältniszusammenstellung während der Inspektion auf. Dabei ist es möglich, dass diese Beleuchtungseinrichtung die Behältniszusammenstellung aus der gleichen Richtung beobachtet, wie diese auch von der Bildaufnahmeeinrichtung beobachtet wird. Bevorzugt ist daher auch die Beleuchtungseinrichtung bezüglich des Transportpfades der Gebinde oberhalb derselben angeordnet. Bevorzugt sind mehrere Beleuchtungselemente bzw.-einrichtungen vorgesehen, welche die Behältniszusammenstellung bevorzugt aus mehreren unterschiedlichen Richtungen beleuchten. Dabei sind jedoch bevorzugt sämtliche Beleuchtungseinrichtungen in einem vorgegebenen Bereich bezüglich einer Transportebene der Behältniszusammenstellung angeordnet, insbesondere oberhalb einer derartigen Transportebene.

Bei den Beleuchtungseinrichtungen kann es sich vorteilhaft um gepulste Beleuchtungseinrichtungen, wie beispielsweise Blitzlampen, handeln. Diese Blitzlampen können insbesondere von der Bildaufnahmeeinrichtung getriggert sein. Vorteilhaft weisen die Beleuchtungseinrichtungen Elemente, wie insbesondere Leuchtioden (LEDs) auf. Dabei können auch Leuchtioden verschiedener Farben (RGB) eingesetzt sein.

Weiterhin ist es denkbar, dass der Bereich, in dem die Inspektionseinrichtung angeordnet ist, abgedunkelt wird, beispielsweise ein Gehäuse vorgesehen ist, durch welches die Behältniszusammenstellungen transportiert werden.

Bei einer weiteren, hier nicht erfindungsgemäßen, Ausführungsform weist die Inspektionseinrichtung eine Informationsausgabeeinrichtung und insbesondere eine Bildausgabeeinrichtung auf, welche zur Ausgabe von Werten bzw. Signalen geeignet sind, welche für eine Behältniszusammenstellung charakteristisch sind.

Die vorliegende Erfindung ist weiterhin auf ein Verfahren zum Herstellen von Behältniszusammenstellungen gerichtet. Dabei wird in einem ersten Verfahrensschritt eine Zusammenstellung aus mehreren Behältnissen gebildet. In einem weiteren Verfahrensschritt wird ein folienartiges Verpackungsmittel an den Behältnissen angebracht, wobei dieses folienartige Verpackungsmittel die Behältnisse wenigstens abschnittsweise umgibt. In einem weiteren Verfahrensschritt wird das folienartige Verpackungsmittel an den Behältnissen angeschrumpft. In einem weiteren Verfahrensschritt werden die Behältnisse mit dem an diesen angeordneten Verpackungsmittel nach dem Anschrumpfen des Verpackungsmittels inspiziert. Damit wird zunächst die vollständige Behältniszusammenstellung hergestellt und anschließend erfolgt eine Inspektion derselben. Denkbar wäre auch eine Inspektion nach dem Verpacken und vor dem Anschrumpfen des Verpackungsmittels.

Vorteilhaft wird die Behältniszusammenstellung während eines Transports derselben inspiziert.

Bei einem weiteren vorteilhaften Verfahren wird wenigstens eine Relativposition eines ersten Behältnisses der Behältniszusammenstellung gegenüber einem zweiten Behältnis der Behältniszusammenstellung erfasst. Zusätzlich oder alternativ ist es möglich, dass wenigstens eine Außenoberfläche der Behältniszusammenstellung inspiziert wird.

Vorteilhaft erfolgt auch eine Auswertung dieser Relativposition. Dabei wird vorteilhaft diese gemessene Relativposition mit einer Soll-Position verglichen.

Aus diesem Vergleich werden vorteilhaft Rückschlüsse über die Korrektheit einer Behältniszusammenstellung gezogen.

Vorteilhaft wird eine Relativposition eines in der Behältniszusammenstellung außen angeordneten Behältnisses gegenüber einem zweiten in der Behältniszusammenstellung außen angeordneten Behältnis verglichen. Dies beruht darauf, dass insbesondere die außen liegenden Behältnisse für eine Geradheit bzw. Ebenheit der Seitenflächen und damit für die Möglichkeit einer weiteren Verarbeitung ausschlaggebend sind. Vorteilhaft wird eine Abweichung der Relativposition eines Behältnisses gegenüber einem anderen Behältnis mit einer Soll-Abweichung bzw. einer Soll-Position verglichen. Dabei ist es denkbar, dass für diese Abweichung ein Grenzwert gebildet wird und bei Überschreitung dieses Grenzwerts eine weitere Reaktion im Hinblick auf den Herstellungsvorgang und/oder das inspizierte Behältnis vorgenommen wird. So ist es möglich, dass eine bestimmte Behältniszusammenstellung in Reaktion auf derartige Messungen ausgeschleust wird. Daneben kann die besagte Behältniszusammenstellung auch mit einer Markierung versehen werden.

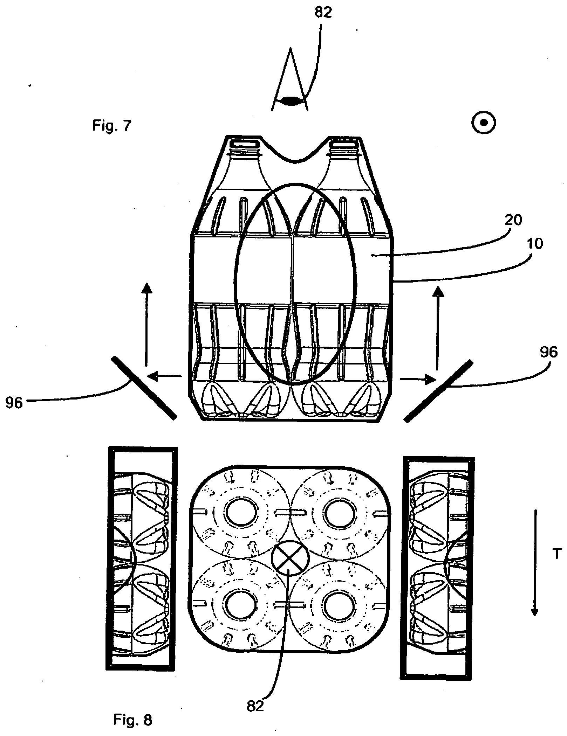

Weitere Vorteile und Ausführungsformen ergeben sich aus den beigefügten Zeichnungen. Darin zeigen:

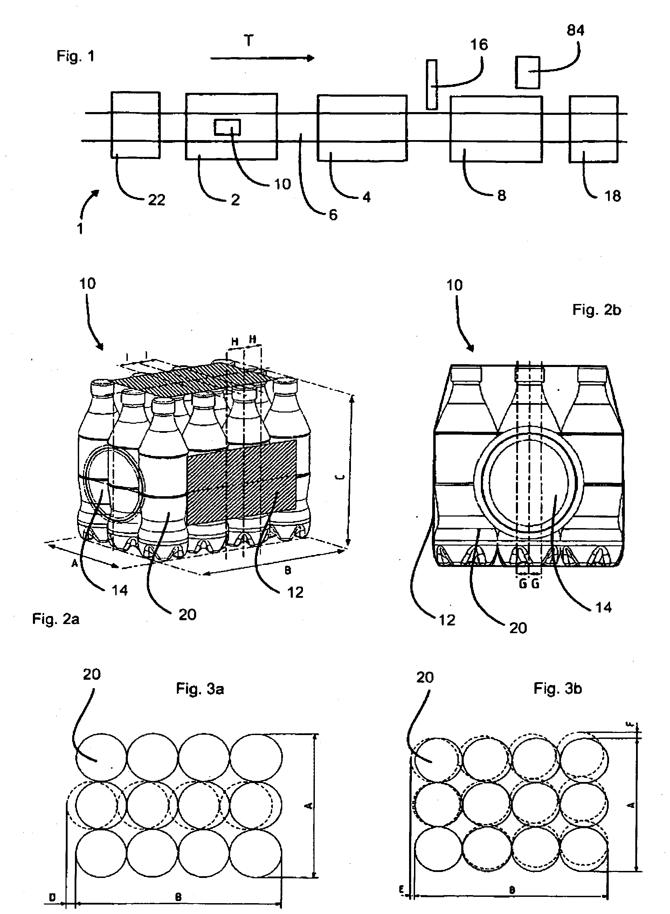

Fig. 1 Eine grob schematische Darstellung einer erfindungsgemäßen Vorrichtung zum Herstellen von Behältniszusammenstellungen;
Fig. 2a, 2b
   zwei Darstellungen einer Behältniszusammenstellung;
Fig. 3a, 3b
   zwei Beispiele für mögliche Abweichungen bzw. Fehler von Behältniszusammenstellungen;
Fig. 4
   eine schematische Darstellung einer nicht erfindungsgemäßen Inspektionseinrichtung;
Fig. 5
   eine schematische Darstellung einer optischen Vermessung von oben;
Fig. 6a
   eine Darstellung einer Vermessung bei Verwendung einer einzigen Gebindebahn;
Fig. 6b
   ein Beispiel für die Vermessung bei zwei Gebindebahnen;
Fig. 6c
   ein Beispiel für die Vermessung bei drei Gebindebahnen;
Fig. 7
   eine weitere schematische Darstellung zur Veranschaulichung der Vermessung;
Fig. 8
   eine weitere Darstellung zur Veranschaulichung einer Vermessung;
Fig. 9
   eine weitere Darstellung der Vermessung unter Bezugnahme auf Fig. 7 und 8;
Fig. 10
   eine Darstellung der Vermessung unter Verwendung eines Linienscanners;
Fig. 11a, 11b
   zwei Darstellungen zur Veranschaulichung einer Inspektion einer Unterseite der Behältniszusammenstellung;
Fig. 12
   eine weitere Darstellung zur Vermessung der Stirnflächen der Behältniszusammenstellung;
Fig. 13
   eine Darstellung zur Veranschaulichung einer Messwerteausgabe;
Fig. 14a- c
   drei Darstellungen einer Schrumpfeinrichtung.

Fig. 1 zeigt eine grob schematische Darstellung einer erfindungsgemäßen Vorrichtung 1. Dabei ist eine Transporteinrichtung 6 vorgesehen, welche die Behältniszusammenstellungen entlang eines vorgegebenen Transportpfades führt bzw. transportiert. Diese Transporteinrichtung kann dabei als Transportband oder Transportkette ausgeführt sein. Daneben wäre es auch denkbar, dass die Transporteinrichtung die Behältniszusammenstellungen an unterschiedlichen Bereichen des Transportpfades unterschiedliche führt bzw. greift. Auch kann sich die Transporteinrichtung aus unterschiedlichen Einheiten zusammensetzen.

Dabei ist es denkbar, dass die Behältnisse (nicht im Einzelnen dargestellt) bereits in einer Gruppe zusammengestellt bei einer Verpackungseinrichtung 2 ankommen und von dieser mit einem folienartigen Packmittel versehen, beispielsweise umhüllt werden. Nach diesem Vorgang werden die so gebildeten Behältniszusammenstellungen 10 mit dem Verpackungsmittel durch die Transporteinrichtung 6 weitergeführt zu der Schrumpfeinrichtung 4. Bei dieser Schrumpfeinrichtung handelt es sich vorteilhaft um einen sogenannten Schrumpftunnel, durch den die Zusammenstellungen gefördert werden, wobei hier die Schrumpffolie erwärmt wird und sich so eng an die Behältniszusammenstellungen 10 anlegt.

Stromabwärts bezüglich dieser Schrumpfeinrichtung 4 ist eine Inspektionseinrichtung 8 vorgesehen, welche die Behältniszusammenstellungen 10 prüft bzw. dabei insbesondere das Ergebnis des Verpackungs- und Schrumpfvorgangs überprüft.

Das Bezugszeichen 16 kennzeichnet eine Positionserfassungseinrichtung, welche eine Position der Behältniszusammenstellungen entlang des Transportpfades erfasst. Die Inspektionseinrichtung 8 kann durch diese Positionserfassungseinrichtung 16 getriggert sein. Das Bezugszeichen 84 bezieht sich auf eine Ausgabeeinrichtung, welche wenigstens ein Signal ausgibt, welches für eine physikalische Eigenschaft der Behältniszusammentellung charakteristisch ist, insbesondere für ein Abweichen wenigstens einer physikalischen Eigenschaft gegenüber einer Referenz.

Das Bezugszeichen 18 kennzeichnet eine Ausschleuseeinrichtung, welche geeignet und dazu bestimmt ist, einzelne Behältniszusammenstellungen aus der weiteren Verarbeitung auszuschleusen. Diese Ausschleusung kann dabei insbesondere in Reaktion auf ein von der Inspektionseinrichtung ausgegebenes Signal erfolgen, welches eine Fehlerhaftigkeit einer Behältniszusammenstellung anzeigt.

Das Bezugszeichen 22 kennzeichnet eine Gruppenbildungseinrichtung, welche Gruppen aus Behältnissen, beispielsweise Zweiergruppen, Vierergruppen, Sechsergruppen etc. bildet.

Fig. 2a zeigt eine Darstellung einer Behältniszusammenstellung 10. Man erkennt, dass bei dem in Fig. 2a gezeigten Beispiel zwölf Behältnisse 20 in einer Behältniszusammenstellung zusammengefasst sind. Das Bezugszeichen 20 kennzeichnet ein einzelnes Behältnis. Das Bezugszeichen 12 bezieht sich auf das folienartige Verpackungsmittel, welches weitgehend um die Behältnisse herum angeordnet ist.

Die Bezugszeichen A, B und C kennzeichnen die Abmessungen der Behältniszusammenstellungen. Dabei wäre es möglich, dass die Zusammenstellung im Wesentlichen quaderförmig ausgebildet ist, bedingt durch den sich verjüngenden Mündungsbereich der Behältnisse sind jedoch die Behältniszusammenstellungen am oberen Ende etwas schmaler als am unteren Ende. Das Bezugszeichen H bezieht sich auf die Toleranzen für die Position eines Aufdrucks. Das Bezugszeichen 14 kennzeichnet eine Öffnung in dem Verpackungsmittel, welche auch als Auge bezeichnet wird und das Bezugszeichen G die Toleranz für die Mittelachse dieser Öffnung bzw. des Folienauges. Die Bezugszeichen D und E kennzeichnen Formtoleranzen für den Versatz.

Fig. 2b zeigt eine Seitenansicht einer Behältniszusammenstellung, wobei hier mit dem Bezugszeichen G ein Radius der Behältnisse im Bereich des Verschlusses dargestellt ist.

Die Fig. 3a; 3b zeigen zwei Beispiele für fehlerhafte Behältniszusammenstellungen bzw. für fehlerhaft zusammengestellte Behältniszusammenstellungen. Bei der in Fig. 3a gezeigten Darstellung erkennt man, dass die mittlere Reihe an Behältnissen (hier durch die gestrichelten Linien dargestellt) gegenüber einer Soll-Position um einen Abstand D verschoben ist. Eine derartige Behältniszusammenstellung kann Probleme beim Übereinanderstapeln bereiten.

Fig. 3b zeigt ein weiteres Beispiel für eine fehlerhafte Zusammenstellung. Man erkennt hier, dass die mittlere Reihe gegenüber der unteren Reihe sowohl seitlich nach links verschoben ist, als auch die einzelnen Längsreihen in der Höhenrichtung hier um den Betrag F verschoben sind. Auch eine derartige Behältniszusammenstellung wäre als fehlerhaft einzustufen und entsprechend auszuschleusen.

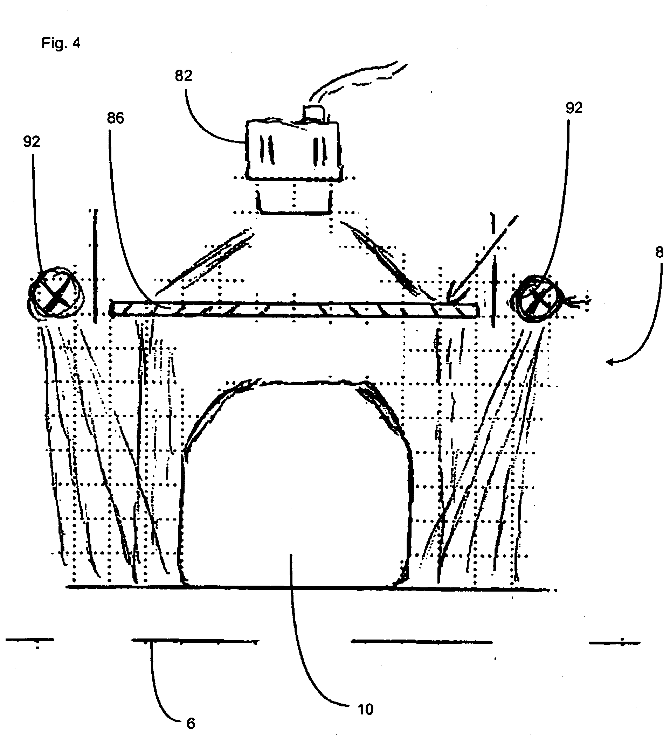

Fig. 4 zeigt eine grob schematische Darstellung einer hier nicht erfindungsgemäßen Inspektions- bzw. Prüfungseinrichtung für eine Behältniszusammenstellung 10. Diese Inspektionseinrichtung weist dabei eine Beobachtungseinrichtung 82, wie beispielsweise eine Kamera, auf, die oberhalb der Behältniszusammenstellungen 10 bzw. deren Transportpfad angeordnet ist.

Das Bezugszeichen 92 kennzeichnet Beleuchtungseinrichtungen, welche insbesondere auch den Hintergrund der Behältniszusammenstellung 10 beleuchten, um so stärkere Kontraste zu erzielen und um insbesondere die Konturen der Behältniszusammenstellung 10, die besonders maßgeblich sind, zu erfassen.

Das Bezugszeichen 86 kennzeichnet einen Linsenkörper, bei dem es sich insbesondere um eine Fresnel-Linse handelt. Diese Fresnel-Linse weist bevorzugt eine sehr kurze Brennweite auf und ermöglicht damit noch eine Anordnung der Beobachtungseinrichtung 82 vergleichsweise nahe an der Behältniszusammenstellung.

Bei einer bevorzugten Ausführungsform findet eine telezentrische Beobachtung der Behältniszusammenstellung 10 durch die Beobachtungseinrichtung 82 statt. So wäre es beispielsweise möglich, ein telezentrisches Objektiv mit einem objektseitig telezentrischen Strahlengang zu verwenden. Dieses würde es erlauben, Objekte, hier die Behältniszusammenstellung, ohne perspektivische Verzerrung zu erfassen. Daneben könnte jedoch auch ein bildseitig telezentrischer Strahlengang verwendet werden, der insbesondere der Parallelisierung des Strahlengangs dient. In diesem Falle liegt die Austrittspupille im Unendlichen, sodass die Strahlenkegel im Wesentlichen senkrecht auf der Bildebene eintreffen. Schließlich könnte auch eine beidseitige Telezentrie verwendet werden, das heißt die Kombination aus einem objektseitigen und bildseitig telezentrischen Strahlengang.

Eine Telezentrie auf Bildaufnehmerseite wird erreicht, indem das optische Element eine Fresnelllinse mit einer Brennweite von 600 mm ist. Bevorzugt wird ein Rillenabstand kleiner 1 mm, besonders bevorzugt < 0,5mm. Der Abstand zur Generierung von Telezentrie ist 550 mm bis zum Objektiv, dass ein Zoom mit einer Brennweite von 10- 40mm sein kann. Bevorzugt werden Objektive mit einer Lichtstärke besser 1:4, 1:2,8. Dergestalt wird ein nutzbarer telezentrischer Bildfelddurchmesser von ca. 350mm erreicht:

Vorteilhaft liegt ein Abstand zwischen einer Oberseite der Behältniszusammenstellung und der Bildaufnahmeeinrichtung bzw. einem Bildaufnahmeelement zwischen 5 cm und 250 cm, bevorzugt zwischen 10 cm und 150 cm, bevorzugt zwischen 30 cm und 120 cm, bevorzugt zwischen 40 cm und 120 cm.
Vorteilhaft sind die Beleuchtungseinrichtungen 92 hier auf der gleichen Seite bezüglich der Behältniszusammenstellungen 10 angeordnet, wie die Beobachtungseinrichtung d.h hier auch oberhalb. Auf diese Weise kann vermieden werden, dass Licht von den Beleuchtungseinrichtungen 92 unmittelbar zu der Beobachtungseinrichtung 82 gelangt.

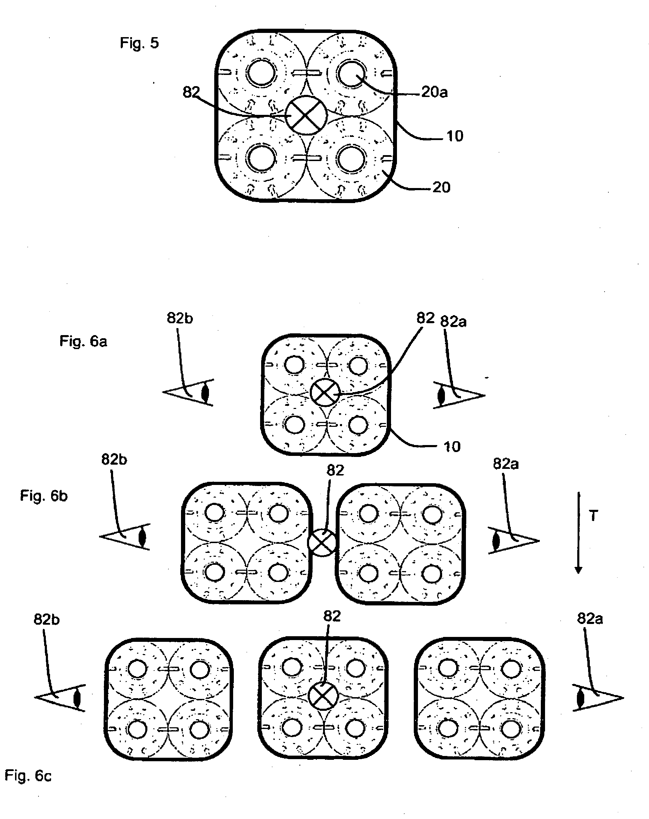

Fig. 5 zeigt eine weitere Darstellung zur Veranschaulichung des Verfahrens. Man erkennt, dass hier die Beobachtungseinrichtung 8 zentral oberhalb der Behältniszusammenstellung 10 angeordnet ist (zumindest zu dem Zeitpunkt der Bildaufnahme). Das Bezugszeichen 20 kennzeichnet wieder die Behältnisse. Das Bezugszeichen 20a einen Mündungs- bzw. Verschlussbereich der Behältnisse. Hier wird also oberhalb der Gebindebahn die Bildaufnahmeeinrichtung angebracht, die hier vertikal nach unten gerichtet ist und insbesondere durch einen Sensor, wie eine Lichtschranke, getriggert jede Behältniszusammenstellung von oben erfasst. Durch entsprechende Bildanalyse können die Grenzen der Behältniszusammenstellungen und auch die Position der Behältnisköpfe 20a ermittelt werden. Auch kann so das Fehlen einzelner Behältnisse 20 festgestellt werden.

Bei der in Fig. 6a gezeigten Darstellung findet zusätzlich eine seitliche Beobachtung durch Bildaufnahmeeinrichtungen 82a, 82b statt. Auf diese Weise können (gegebenenfalls auch durch eine geeignete Spiegeloptik) die Seiten komplett oder ausschnittsweise beobachtet und/oder nach oben projiziert werden.

Fig. 6b zeigt eine weitere Gestaltung, bei der zwei Behältniszusammenstellungen nebeneinander in Richtung des Transportpfades T transportiert werden. Bei dieser Ausgestaltung ist hier eine Bildaufnahmeeinrichtung 82 zwischen diesen beiden Behältniszusammenstellungen angeordnet und zwei weitere Bildaufnahmeeinrichtungen 82a, 82b oder eine entsprechende Spiegeloptik jeweils auf den beiden Seiten der Behältniszusammenstellungen.

Fig. 6c zeigt eine Darstellung, bei der drei Behältniszusammenstellungen parallel bzw. nebeneinander in der Transportrichtung T bewegt werden. Hier ist eine Bildaufnahmeeinrichtung 82 oberhalb der mittleren Behältniszusammenstellung angeordnet und zwei weitere Bildaufnahmeeinrichtungen 82a, 82b auf den beiden Seiten.

Fig. 7 und 8 zeigen eine weitere Darstellung zur Veranschaulichung der optischen Vermessung. Hier sind Strahlungsumlenkelemente 96 bzw. Spiegel vorgesehen, welche ermöglichen, dass die gesamten Seitenflächen der Behältniszusammenstellung 10 abgebildet werden können. So kann, wie oben erwähnt, aus stückweise abgebildeten Bereichen ein komplettes Abbild der Seitenflächen zusammengesetzt werden. Dabei wäre es auch möglich, die Bilder der Seitenflächen auch auf die Bildaufnahmeeinrichtung 82 abzubilden. Zu diesem Zweck könnten teildurchlässige Spiegel eingesetzt werden oder auch eine mehrfache Beleuchtung mit Licht unterschiedlicher Wellenlänge erfolgen. Die Behältniszusammenstellungen werden hier senkrecht zur Figurenebene transportiert. Die hier dargestellte Öffnung des Verpackungsmittels ist nicht notwendigerweise vorhanden.

Fig. 8 zeigt eine derartige Darstellung, wobei hier durch die beiden Reflexions- bzw. Spiegelelemente 96 jeweils die Bodenbereiche der Behältniszusammenstellungen erfasst werden können. Sich eventuell durch die Optik ergebene Verzerrungen können dabei vorteilhaft von einer geeigneten Software korrigiert werden. Auf diese Weise wäre es möglich, auch die jeweiligen Seitenbereiche der Behältniszusammenstellungen aufzunehmen, wobei auch weitere (nicht gezeigte) Spiegelelemente 96 vorgesehen sein könnten.

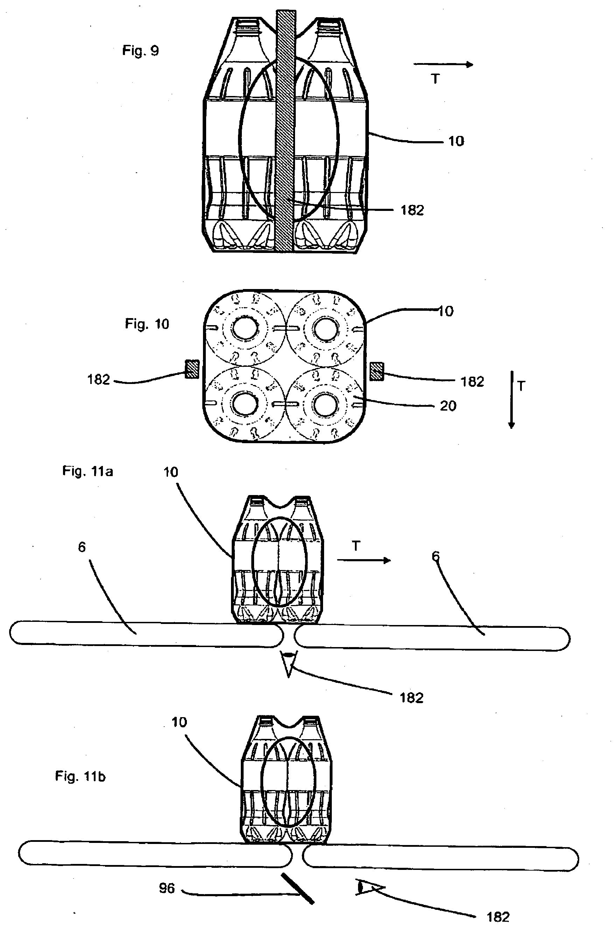

Die Fig. 9 und 10 zeigen eine weitere Ausgestaltung. Bei dieser Ausgestaltung wird eine Beobachtungseinrichtung 82 in Form eines Linienscanners 182 eingesetzt. Dieser Linienscanner 182 ist hier ebenfalls stationär angeordnet und die Behältniszusammenstellung bewegt sich relativ gegenüber diesem Linienscanner 182 entlang des Transportpfades T. Dieser Linienscanner kann aus einzelnen Spalten der Seitenansicht ebenfalls ein komplettes Bild zusammensetzen. Dabei wäre es zusätzlich möglich, dass kritische Bereiche, wie beispielsweise die Verschweißung des seitlichen unteren Folienlappens zusätzlich oder alternativ mit einem kapazitiven Sensor auf ihre Güte geprüft werden können.

Fig. 10 zeigt eine entsprechende Ansicht von oben, wobei hier zwei derartige Linienscanner 182 eingesetzt sind.

Die Fig. 11a, 11b zeigen eine Darstellung zur Überprüfung der Bodenverschweißung. Auch hier kann wieder eine Beobachtungseinrichtung 82, wie beispielsweise auch ein kapazitiver Sensor oder auch ein Linienscanner, eingesetzt werden, die hier zwischen zwei Transporteinrichtungen 6 angeordnet sind und das Behältnis während der Überführung von beispielsweise der linken Transporteinrichtung auf die rechte Transporteinrichtung 6 überprüfen. Dabei ist es möglich, dass die Beobachtungseinrichtung direkt die Behältniszusammenstellungen 10 überprüft, es wäre jedoch auch möglich, dass der Strahlengang, wie in Fig. 11b gezeigt, über eine Umlenkeinrichtung wie einen Spiegel geführt wird.

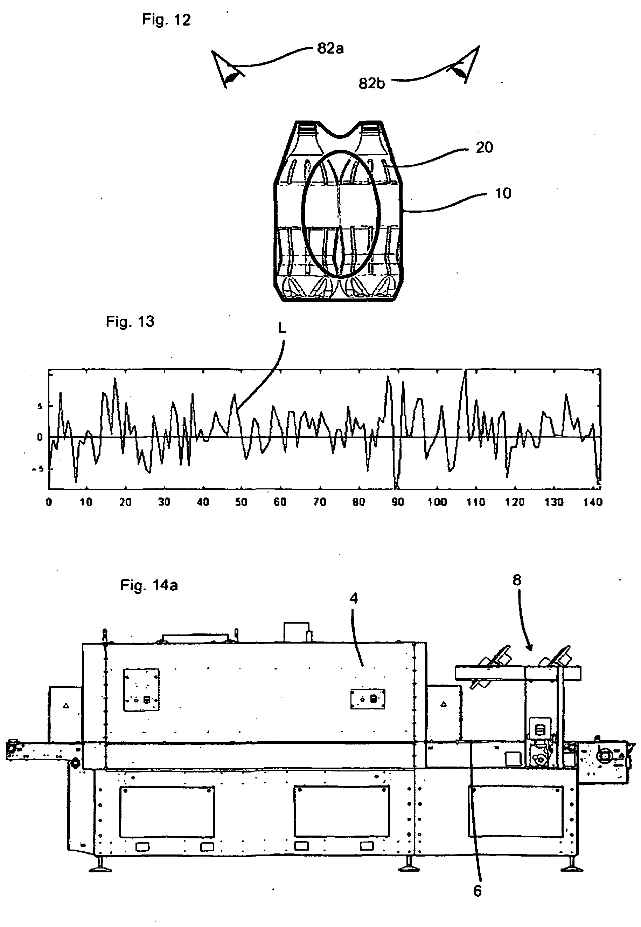

Fig. 12 veranschaulicht eine weitere Beobachtung der Behältniszusammenstellungen, wobei hier über die beiden Beobachtungseinrichtungen 82a und 82b insbesondere auch die Stirnflächen in den Aufnahmebereich einer Kamera projiziert werden können. Hier sind zwei Kameras vorgesehen, welche schräg von oben die Gebindebahn beobachten.

Daneben ist es auch möglich, über optische Elemente (speziell Spiegel) auch nur eine Kamera zu verwenden und die benötigten Ansichten in den Darstellungsbereich dieser Kamera bzw. der (mindestens einen) Kamera zu projizieren.

Fig. 13 zeigt eine Darstellung einer möglichen Bildaufnahme. Dabei kann die in dem oberen Teilbild gezeigte Linie L die tatsächlich gemessene Abweichung von einer idealen Verpackungsabmessung, beispielsweise von einer Seitenfläche, zeigen. Die beiden unteren Linien können die entsprechenden Abweichungen in den beiden anderen Richtungen darstellen. In diesen Darstellungen können Grenzwerte gebildet werden, welche noch als akzeptabel angesehen werden. Werden diese überschritten, kann eine Informationsausgabeeinrichtung dem Benutzer mitteilen, dass die betreffende Behältniszusammenstellung fehlerhaft verpackt wurde und aus diesem Grunde beispielsweise auszuschleusen ist. Damit könnte in Reaktion auf ein derartiges Ergebnis eine nachgeordnete Ausschleuseeinrichtung die betreffende Behältniszusammenstellung ausschleusen. Auch wäre es möglich, dass in Abhängigkeit von einem derartigen Ergebnis eine in der Transportrichtung der Behältniszusammenstellung 10 liegende Behandlungseinheit geregelt oder deren Betrieb modifiziert wird. Vorteilhaft erfolgt jedoch ein derartiges Ausschleusen (voll)automatisch.

Die Figuren 14a - 14c zeigen drei Darstellungen der Schrumpfeinrichtung 4. Diese Schrumpfeinrichtung ist hier jeweils als sog. Schrumpftunnel ausgebildet. Das Bezugszeichen 6 bezieht sich wieder auf die Transporteinrichtung. Direkt im Anschluss an die Schrumpfeinrichtung ist die Beobachtungseinrichtung 8 vorgesehen.

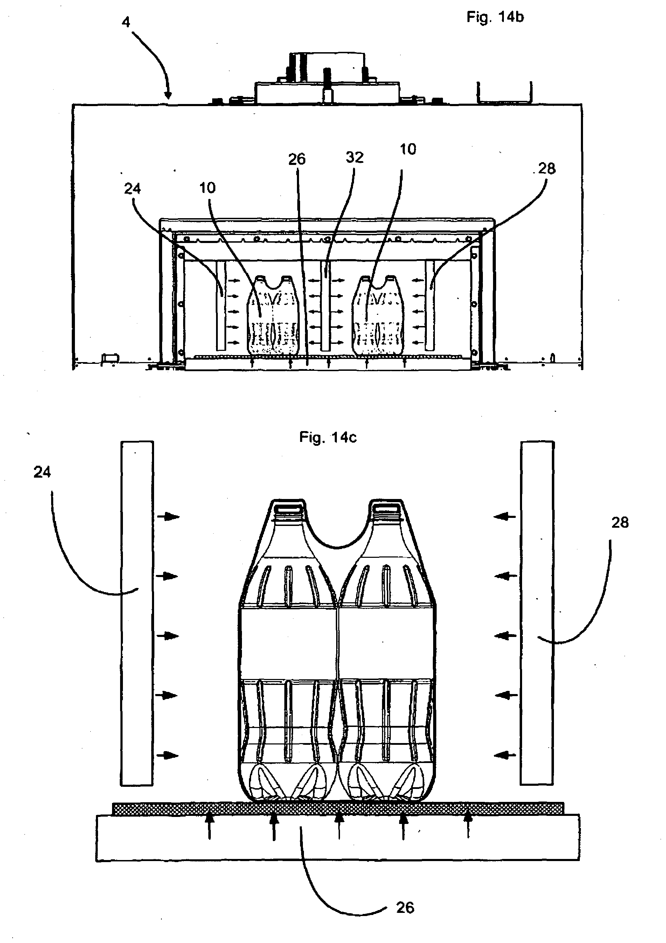

Fig. 14b zeigt eine weitere Ausführungsform der Schrumpfeinrichtung 4. Bei dieser Ausfürhrungsform werden zwei Reihen an Behältniszusammenstellungen parallel zueinander transportiert. Die Bezugszeichen 24 und 28 beziehen sich auf seitlich angeordnete Beaufschlagungseinrichtungen, welche die Behältniszusammenstellung von der Seite her mit heißer Luft beaufschlagen. Zwischen den Transportbahnen der Behältniszusammenstellungen 10 befindet sich eine weitere Beaufschlagungseinrichtung 32, welche eine Beaufschlagung beider Behältniszuammenstellungen jeweils von beiden Seiten her ermöglicht. Mittels einer weiteren Beaufschlagungseinrichtung 26 werden die Behältniszusammenstellungen auch von unten her mit heißer Luft beaufschlagt. Bevorzugt ist ein Abstand zwischen den seitlichen Beaufschlagungseinrichtungen 24, 28 und 32 einstellbar bzw. veränderbar. Auch wäre es denkbar, dass ein Höhenniveau der einzelnen Beaufschlagungseinrichtungen 24, 28 und 32 gegenüber der Transporteinrichtung bzw. der Beaufschlagungseinrichtung 26 veränderbar ist.

Fig. 14c zeigt eine weitere Darstellung einer Schrumpfeinrichtung 4. Auch hier sind wieder drei Beaufschlagungseinrichtungen 24, 28 und 26 vorgesehen, welche die Behältniszusammenstellungen 10 mit dem daran angeordneten Packmittel von den Seiten sowie von unten her mit heißer Luft beaufschlagen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: erfindungsgemäße Vorrichtung
- 2: Verpackungseinrichtung
- 4: Schrumpfeinrichtung
- 6: Transporteinrichtung
- 8: Beobachtungseinrichtung
- 10: Behältniszusammenstellung
- 12: Verpackungsmittel
- 14: Öffnung in Verpackungsmittel
- 16: Positionserfassungseinrichtung
- 18: Ausschleuseeinrichtung
- 20: einzelnes Behältnis
- 20a: Behältnisköpfe
- 24, 26, 28, 32: Beaufschlagungseinrichtung
- 22: Gruppenbildungseinrichtung
- 82: Beobachtungseinrichtung / Linienscanner
- 82a, 82b: Bildaufnahmeeinrichtungen
- 84: Ausgabeeinrichtung
- 86: Linsenkörper
- 92: Beleuchtungseinrichtungen
- 96: Spiegelelemente
- A, B, C: Abmessungen der Behältniszusammenstellungen
- H: Toleranz für Aufdruck
- G: Toleranz für Mittelachse der Öffnung
- D, E: Formtoleranzen für Versatz
- F: Verschiebungsbetrag
- T: Tansportpfad
- L: Linie

## Patentansprüche

1. Vorrichtung (1) zum Herstellen von Behältniszusammenstellungen (10), wobei die Vorrichtung eine Verpackungseinrichtung (2) aufweist, welche dazu konfiguriert ist, mehrere Behältnisse (20) zumindest teilweise mit einem folienartigen Verpackungsmittel (12) zu umhüllen und so eine Behältniszusammenstellung (10) zu bilden, mit einer Schrumpfeinrichtung (4), welche dazu konfiguriert ist, das die Behältnisse (20) wenigsten teilweise umhüllende Verpackungsmittel (12) zu schrumpfen, mit einer Transporteinrichtung (6), welche dazu konfiguriert ist, die von dem Verpackungsmittel (12) umhüllten Behältnisse (20) in einer vorgegebenen Transportrichtung zu transportieren und mit einer Inspektionseinrichtung (8), welche dazu konfiguriert ist, die von dem Verpackungsmittel (12) wenigstens teilweise umhüllten Behältnisse (20) nach dem Schrumpfvorgang zu inspizieren, wobei diese Inspektionseinrichtung (8) auf einen Bereich der Vorrichtung (1) ausgerichtet ist, der nach der Schrumpfeinrichtung (4) befindlich ist, wobei die Inspektionseinrichtung (8) in der Transportrichtung (R) der Behältnisse (20) nach der Schrumpfeinrichtung (4) angeordnet ist, und wobei die Inspektionseinrichtung (8) dazu konfiguriert ist, eine Relativposition wenigstens eines Behältnisses (20) der Behältniszusammenstellung (10) gegenüber wenigsten einem weiteren Behältnis (20) dieser Behältniszusammenstellung (10) zu erfassen, und wobei auch eine Auswerteeinheit vorgesehen ist, welche dazu konfiguriert ist, diese erfassten Positionen auszuwerten.

2. Vorrichtung (1) nach Anspruch 1,
**dadurch gekennzeichnet, dass**
die Inspektionseinrichtung (8) eine Bildaufnahmeeinrichtung (82) aufweist, welche geeignet und vorgesehen ist, Bilder der Behältniszusammenstellung (10) aufzunehmen.

3. Vorrichtung (1) nach wenigstens einem der vorangegangenen Ansprüche,
**dadurch gekennzeichnet, dass**
die Vorrichtung (1) eine Positionserfassungseinrichtung (16) aufweist, welche eine Position der von dem Verpackungsmittel umhüllten Behältnisse in der Transportrichtung erfasst.

4. Verfahren zum Herstellen von Behältniszusammenstellungen mittels einer Vorrichtung gemäß Anspruch 1 mit den Schritten
- Bilden einer Zusammenstellung aus mehreren Behältnissen (20);
- Anbringen eines folienartigen Verpackungsmittels an den Behältnissen (20), wobei dieses folienartige Verpackungsmittel (12) die Zusammenstellung der Behältnisse (20) wenigstens abschnittsweise umgibt;
- Anschrumpfen des folienartigen Verpackungsmittels (12) an den Behältnissen (20)
- Inspizieren der Behältnisse (20) mit dem an diesen angeordneten Verpackungsmittel nach dem Anschrumpfen des Verpackungsmittels (12), wobei die Inspektionseinrichtung (8) auf einen Bereich der Vorrichtung (1) ausgerichtet ist, der nach der Schrumpfeinrichtung (4) befindlich ist, und wobei wenigstens eine Relativposition eines ersten Behältnisses (20) der Behältniszusammenstellung (10) gegenüber einem zweiten Behältnis der Behältniszusammenstellung (10) erfasst wird, und wobei die Auswerteeinheit diese erfassten Positionen auswertet.

## Claims

1. An apparatus (1) for the production of (10) of container combinations, wherein the apparatus has a packaging device (2) which is configured to wrap several containers (20) at least in part with a film-like packaging material (12) and to thus form a container combination (10), with a shrinking device (4) which is configured to shrink the packaging material (12) which wraps the containers (20) at least in part, with a transport device (6) which is configured to transport the containers (20) - wrapped by the packaging material (12) - in a pre-set conveying direction, and with an inspection device (8) which is configured to inspect the containers (20) - wrapped at least in part by the packaging material (12)
- after the shrinking procedure, wherein this inspection device (8) is directed to an area of the apparatus which is situated downstream of the shrinking device (4), wherein the inspection device (8) is arranged in the transport direction (R) of the containers (20) downstream of the shrinking device (4) and wherein the inspection device (8) is configured to detect a relative position of at least one container (20) of the container combination (10) with respect to at least a further container (20) of this container combination (10) and wherein also an evaluation unit is provided which is configured to evaluate the detected positions.

2. An apparatus (1) according to claim 1,
**characterized in that**
the inspection device (8) has an image-recording device (82) which is suitable and provided for recording images of the container combination (10).

3. An apparatus (1) according to at least one of the preceding claims,
**characterized in that**
the apparatus (1) has a position detection device (16) which detects a position of the containers wrapped by the packaging material in the transport direction.

4. A method of producing container combinations by means of an apparatus according to claim 1 with the steps
- forming a combination from several containers (20);
- applying a film-like packaging material to the containers (20), wherein this film-like packaging material (12) surrounds the combination of the containers (20) at least in sections;
- shrinking the film-like packaging material (12) onto the containers (20);
- inspecting the containers (20) with the packaging material arranged on them after the shrinkage of the packaging material (12), wherein this inspection device (8) is directed to an area of the apparatus (1) which is situated downstream of the shrinking device (4) and wherein at least a relative position of a first container (20) of the container combination (10) is detected with respect to a second container of the container combination (10) and wherein the evaluation unit evaluates these detected positions.

## Revendications

1. Dispositif (1) de fabrication d'assemblages de récipients (10), le dispositif comprenant un système d'emballage (2), lequel est configuré pour envelopper plusieurs récipients (20) au moins partiellement d'un emballage (12) du type film et pour ainsi former un assemblage de récipients (10), ledit dispositif comprenant un système de rétraction (4), lequel est configuré pour rétracter l'emballage (12) enveloppant au moins partiellement les récipients (20), un système de transport (6), lequel est configuré pour transporter les récipients (20) enveloppés de l'emballage (12) dans une direction de transport prédéfinie et un système d'inspection (8), lequel est configuré pour inspecter les récipients (20) enveloppés au moins partiellement de l'emballage (12) après le processus de rétraction, ce système d'inspection (8) étant orienté vers une zone du dispositif (1) qui est située en aval du système de rétraction (4), le système d'inspection (8) étant agencé dans la direction de transport (R) des récipients (20) en aval du système de rétraction (4), et le système d'inspection (8) étant configuré pour détecter une position relative au moins d'un récipient (20) de l'assemblage de récipients (10) par rapport à au moins un autre récipient (20) de cet assemblage de récipients (10), et une unité d'évaluation étant également prévue, laquelle est configurée pour évaluer ces positions détectées.

2. Dispositif (1) selon la revendication 1,
**caractérisé en ce que**
le système d'inspection (8) comprend un système de capture d'images (82), lequel est adapté et conçu pour capturer des images de l'assemblage de récipients (10).

3. Dispositif (1) selon au moins l'une des revendications précédentes,
**caractérisé en ce que**
le dispositif (1) comprend un système de détection de position (16), lequel détecte une position des récipientsenveloppés de l'emballage dans la direction de transport.

4. Procédé de production d'assemblages de récipients au moyen d'un dispositif selon la revendication 1 comprenant les étapes consistant à :
- former un assemblage de récipients à partir de plusieurs récipients (20);
- appliquer un emballage du type film sur les récipients (20), cet emballage du type film (12) entourant au moins en sections l'assemblage des récipients (20) ;
- rétracter l'emballage (12) du type film sur les récipients (20) ;
- inspecter les récipients (20) sur lesquels est placé l'emballage après la rétraction de l'emballage (12), le système d'inspection (8) étant orienté vers une zone du dispositif (1) qui est située en aval du système de rétraction (4), et au moins une position relative d'un premier récipient (20) de l'assemblage de récipients (10) par rapport à un deuxième récipient de l'assemblage de récipients (10) étant détectée, et l'unité d'évaluation évaluant ces positions détectées.
